# FASCICULE DE BREVET EUROPEEN

(11) **EP 1 868 440 B1**
(45) Date de publication et mention de la délivrance du brevet: **10.05.2017**
(21) Numéro de dépôt: 06726112.3
(22) Date de dépôt: 21.03.2006
(51) Int. Cl.: A21B 1/52, F24B 1/20, A47J 37/07

(54) **DISPOSITIF DESTINE A LA CUISSON DE PIZZAS ET DE GRILLADE**
.VORRICHTUNG ZUM BACKEN VON PIZZAS UND GRILLEN
DEVICE FOR COOKING PIZZAS AND BARBECUES

(30) Priorité: 21.03.2005 FR 0502744
(43) Date de publication de la demande: 26.12.2007
(73) Titulaire: Immordino, Gérard, 13014 Marseille (FR)
(72) Inventeur: Immordino, Gérard, 13014 Marseille (FR)
(74) Mandataire: Novagraaf Technologies
(86) Numéro de dépôt international: PCT/FR2006/000613
(87) Numéro de publication internationale: WO 2006/100376

(56) Documents cités:
- EP-A- 0 226 522
- CA-A1- 2 268 503
- DE-C- 18 783
- FR-A- 2 288 466
- FR-A- 2 376 388
- FR-A1- 2 757 608
- US-A- 3 714 937
- US-A- 4 430 985
- US-A- 5 582 094
- US-B1- 6 543 435

## Description

La présente invention concerne un dispositif destiné à la cuisson de pizzas et de grillades. Ce four, à bois ou à gaz, est démontable et mobile, il comporte à la fois un système d'évacuation des fumées lui permettant néanmoins de maintenir une température élevée en son sein et un système de récupération des cendres.

Un four à bois mobile et démontable est décrit par le document US6543435B.

Les fours à pizza au feu de bois actuellement disponibles sur le marché sont des fours réfractaires nécessitant de la maçonnerie et donc l'intervention d'un professionnel.

Immobiles et non démontables, ils occupent un espace important et leur poids est conséquent. De plus, le bâti de ces fours demande un temps d'attente conséquent avant utilisation en raison de l'humidité liée aux travaux de maçonnerie. Le risque d'une utilisation prématurée en est la fissuration. Ces fours présentent l'inconvénient, une fois construits à un emplacement défini, de ne pouvoir être déplacés.

Le dispositif selon l'invention est décrit par l'objet de la revendication 1 et permet de remédier à ces inconvénients. En effet, cette innovation permet de démocratiser le four à pizzas :
- Il est en fonte alimentaire, car ses composants, à l'état de produit fini, sont destinés à entrer en contact direct avec les denrées alimentaires, et ce à usage régulier, en font également un matériau de choix tant par sa résistance aux chocs, à l'oxydation que par sa faculté de conservation de la chaleur.
- Il est démontable car constitué de plusieurs éléments superposés s'imbriquant les uns dans les autres à l'aide de parties mâles et femelles assurant ainsi la stabilité et l'étanchéité de l'ensemble, le tout conforté par le propre poids du four.
- La partie supérieure du four comporte, au sommet et au centre, une cheminée assurant l'évacuation des fumées. Ce four offre le double avantage de s'utiliser en tant que barbecue en ôtant, éventuellement, les parties supérieures et en posant une grille de cuisson sur le premier élément de la base du four.

- La partie sur laquelle reposent les aliments est soit une sole réfractaire, soit un assemblage de briques réfractaires. Cette sole repose sur une grille métallique ou en fonte. Grâce à sa forme rectangulaire, les cendres peuvent s'évacuer et être récupérées dans le système en forme d'entonnoir placé sous le four.
- Selon une variante de l'invention, un système en forme d'entonnoir, de cône ou de trapèze (4 pans) peut, une fois la température suffisamment élevée, recevoir les braises provenant de la sole réfractaire afin de la chauffer par dessous et d'obtenir une chaleur tournante. Sa partie inférieure dispose d'un système d'ouverture facilitant l'évacuation des cendres froides pour un nettoyage facile. Le matériau de constitution de ce système sera soit en fonte, soit en métal.
- Ce four, peut être posé sur un chariot composé de tubes ou de barres métalliques prévus pour supporter le poids de l'ensemble, est rendu mobile grâce aux roues dont une directionnelle munie d'un frein.

Les dessins annexés illustrent l'invention :
La figure 1 représente, de profil, le dispositif dans son ensemble.

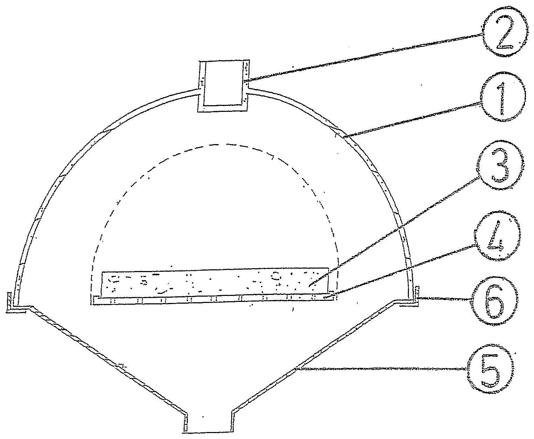

La figure 2 représente le four vu de face.

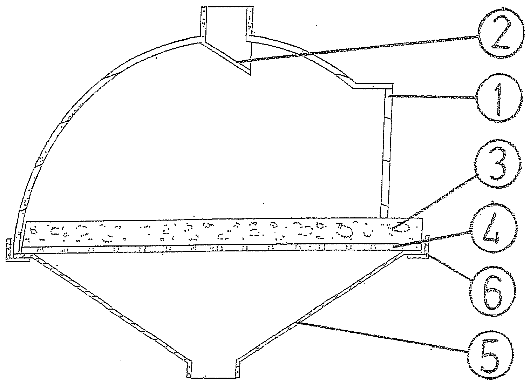

La figure 3 représente le four vu de profil.

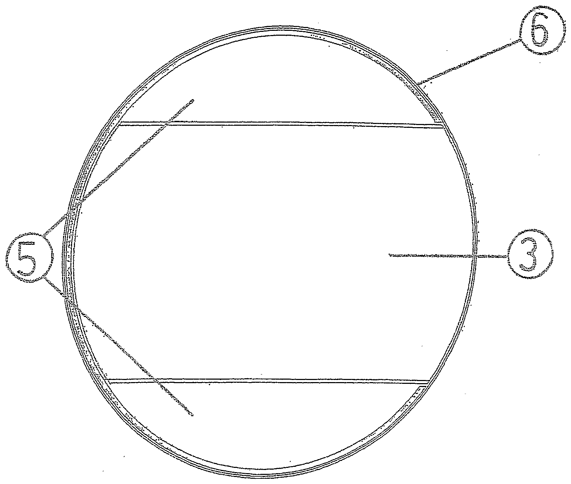

La figure 4 représente la sole réfractaire vue de dessus.
La figure 5 représente le dispositif en détail.

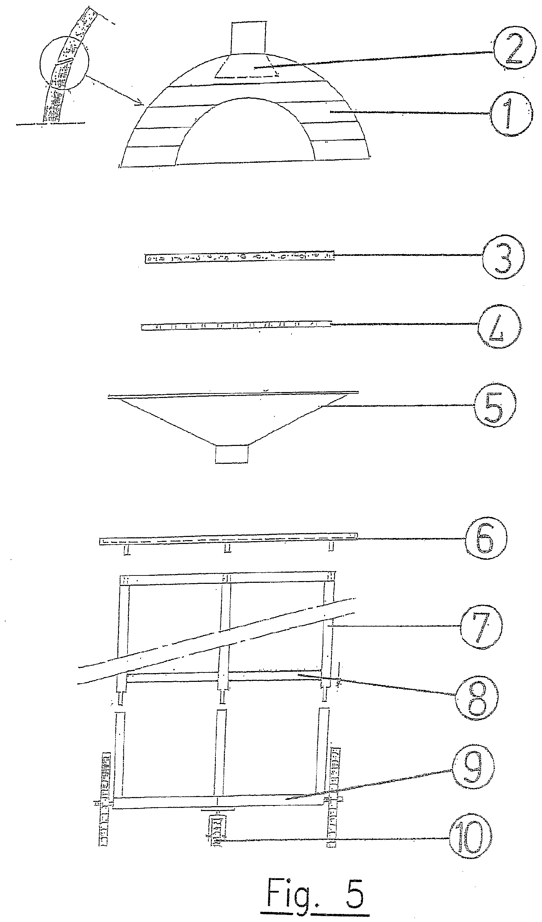

En référence à ces dessins, le dispositif (fig. 5) comporte une partie supérieure (1) en forme de dôme constituée d'une voûte en fonte, qui peut être, extérieurement, émaillée afin d'offrir une meilleure esthétique au consommateur. Elle est composée de plusieurs éléments simples soit circulaires, soit en quartiers, se superposant et s'imbriquant les uns dans les autres au moyen d'un système «mâle femelle». Ce système d'imbrication peut être en biseau ou en dents de scie. L'assemblage des différents éléments est aisé car il suffit de les faire reposer les uns sur les autres. Le démontage est facilité par des poignées moulées dans chaque élément permettant à chacun d'eux d'être portable.

La partie supérieure (1) du four comporte un orifice (2) surélevé d'un manchon pouvant être équipé d'un équipement destiné à la sortie de la fumée, un conduit se prolongeant, à partir de cet orifice, vers l'avant du four à l'intérieur de la voûte, se terminant par un passage réduit permettant l'évacuation des fumées et évitant une trop grande déperdition de chaleur.

La sole réfractaire (3) peut être soit segmentée en plusieurs éléments afin d'en faciliter l'assemblage, soit en briques réfractaires simplement apposées les unes contre les autres. Elle est de préférence de forme rectangulaire et de dimension réduite sur deux côté afin que les braises puissent être versées vers le système d'évacuation.

La sole repose sur une grille (4) métallique ou en fonte de forme circulaire carrée ou rectangulaire.

Le dispositif est muni d'un système (5), en métal ou en fonte, de forme conique situé sous le four et permettant de recueillir la braise provenant de la sole une foie que la température du four est satisfaisante. Le feu de bois chauffe alors la sole par dessous. De plus, ce cône dispose d'un système permettant une bonne répartition de la braise assurant une chaleur et une cuisson homogènes. Il comporte également une ouverture, fermée par un clapet, au niveau de la partie inférieure la plus étroite, afin de permettre, après utilisation, l'évacuation aisée des cendres récupérées dans un tiroir prévu à cet effet et situé sous le dispositif.

La base du four s'imbriquera dans un cercle métallique (6), ou en fonte, muni de trois points d'ancrage se fixant sur chaque angle de la partie supérieure du chariot.

Le chariot (7) est démontable et réalisé en tubes ou barres métalliques, supporte le poids du four, du dispositif en entonnoir, de la sole et de la grille. Il comporte une étagère (8) destinée à recevoir les divers ustensile utiles au pizzaiolo et un plateau de stockage du bois (9). Sa mobilité est assurée par des roues dont une directionnelle (10) située à l'avant et munie d'un frein.

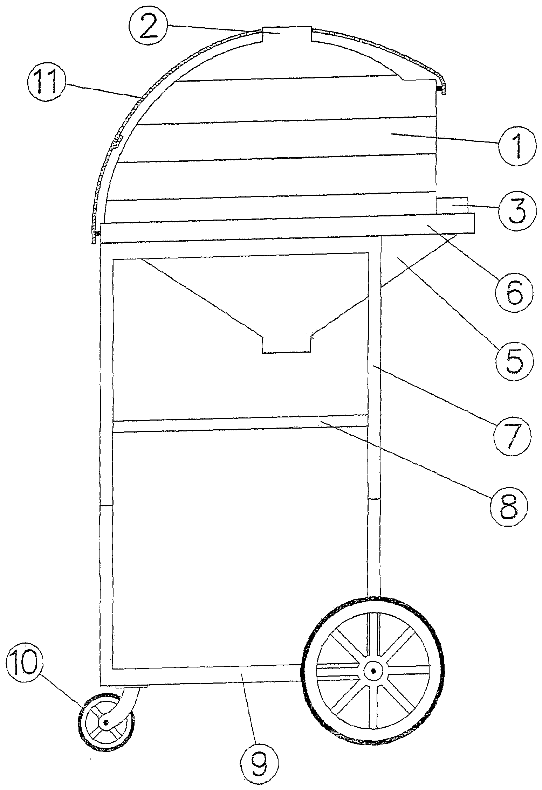

La voûte sera recouverte d'une coupole (11) ajourée, réalisée de préférence en deux parties reposant l'une sur l'autre. Cette coupole sera déterminée de façon à ménager entre elle et la voûte un espace permettant la circulation de l'air, afin de la maintenir à une température peu élevée, de façon à éviter les brûlures des utilisateurs (fig. 1).

Cette invention est destinée à un usage domestique. Toute personne disposant d'un terrain, d'une terrasse ou d'un balcon peut utiliser ce four. Il peut être distribué de façon non limitative par des grandes surfaces spécialisées.

## Revendications

1. °. Dispositif destiné à la cuisson de pizzas et de grillades, à bois ou à gaz, comportant une partie supérieure en forme de dôme et composée d'éléments simples, portables, emboîtables et superposables, constituant un four et doté à son sommet d'un orifice (2),
**caractérisé en ce que** : - ladite partie supérieure est en fonte alimentaire,
- le dôme de la partie supérieure (1) est recouvert d'une coupole (11) ajourée, agencée de façon à ménager entre elle et le dôme un espace permettant la circulation de l'air, afin de la maintenir à une température peu élevée, de façon à éviter les brûlures des utilisateurs,
- le four est équipée d'une sole réfractaire (3) sur laquelle reposent les aliments, qui est de dimension réduite sur deux côtés pour permettre le passage des braises et des cendres, et est posée en appui sur une grille en fonte (6), et **en ce que**, sous ladite sole réfractaire, est disposé un cône de récupération (5) des braises et cendres muni d'un système permettant une bonne répartition de la braise assurant une chaleur et une cuisson homogènes et d'un système d'ouverture facilitant l'évacuation des cendres froides pour un nettoyage facile.

2. °. Dispositif selon la revendication 1, **caractérisé en ce que** l'orifice (2) est surélevé d'un manchon apte à recevoir un équipement destiné à l'évacuation des fumées.

3. °. Dispositif selon l'une quelconque des revendications précédentes, **caractérisé en ce qu'**il repose sur un chariot (7) mobile comportant une étagère (8) destinée à recevoir les divers ustensiles utiles au pizzaiolo, et un plateau de stockage du bois (9).

4. °. Dispositif selon l'une quelconque des revendications précédentes, **caractérisé en ce que** la partie supérieure (1) comporte, à partir de l'orifice (2), un conduit se prolongeant à l'intérieur de la voûte vers l'avant du four, se terminant par un passage réduit pour les fumées, de façon à éviter une trop grande déperdition de la chaleur.

5. °. Dispositif selon l'une quelconque des revendications précédentes, **caractérisé en ce que** le chariot (7) mobile comporte des roues, dont une directionnelle (10) équipée d'un frein, qui rendent aisé son déplacement.

6. °. Dispositif selon l'une quelconque des revendications précédentes, **caractérisé en ce que** la coupole (11) est réalisée en deux parties reposant l'une sur l'autre.

7. °. Dispositif selon l'une quelconque des revendications 3 et 5, **caractérisé en ce que** la base du four s'imbrique dans un cercle métallique (6) ou en fonte muni de points d'ancrage se fixant sur la partie supérieure du chariot (7).

8. ^{e}. Dispositif selon l'une quelconque des revendications précédentes, **caractérisé en ce que** chaque élément en fonte comporte des poignets moulées permettant à chacun d'être portable.

9. °. Dispositif selon l'une quelconque des revendications précédentes, **caractérisé en ce que** toutes les parties sont aisément démontables.

## Patentansprüche

1. Vorrichtung, welche zum Backen von Pizzas und Grillgerichten mit Holz oder Gas vorgesehen ist, einen oberen Teil in Kuppenform aufweisend, welcher aus einfachen, transportablen, schachtelbaren und stapelbaren Elementen zusammengesetzt ist, welcher einen Ofen bildet und an seinem Scheitel mit einer Öffnung (2) versehen ist,
**dadurch gekennzeichnet, dass**:
- der obere Teil aus lebensmittelverträglichem Gusseisen besteht,
- die Kuppenform des oberen Teils (1) von einer durchbrochenen Kuppel (11) überdeckt ist, welche derartig eingerichtet ist, dass zwischen ihr und der Kuppenform ein Spalt herbeigeführt wird, welcher die Zirkulation von Luft ermöglicht, um sie auf einer niedrigeren Temperatur zu halten, so dass Verbrennungen der Benutzer vermieden werden,
- der Ofen mit einem feuerfesten Boden (3) ausgerüstet ist, auf welchem die Lebensmittel aufliegen, welcher an zwei Seiten reduzierte Abmessungen aufweist, um den Durchgang von Glut und Asche zu ermöglichen, und welcher auf einem Rost aus Gusseisen (6) aufliegt, und dadurch dass unter dem feuerfesten Boden ein Trichter zur Rückgewinnung (5) von Glut und Asche angeordnet ist, welcher mit einem System, welches eine gute Verteilung der Glut ermöglicht, um eine homogene Hitze und ein homogenes Backen zu gewährleisten, und einem System zur Öffnung versehen ist, welches das Entfernen der kalten Asche für eine einfache Reinigung erleichtert.

2. Vorrichtung nach Anspruch 1, **dadurch gekennzeichnet, dass** die Öffnung (2) von einem Stutzen erhöht wird, welcher geeignet ist, eine Ausrüstung aufzunehmen, welche zur Abführung des Rauchs vorgesehen ist.

3. Vorrichtung nach einem der vorhergehenden Ansprüche, **dadurch gekennzeichnet, dass** sie auf einem beweglichen Wagen (7) aufliegt, welcher ein Ablagegestell (8), welches vorgesehen ist, um die verschiedenen, für den Pizzabäcker nötigen Utensilien aufzunehmen, sowie eine Platte zur Lagerung des Holzes (9) aufweist.

4. Vorrichtung nach einem der vorhergehenden Ansprüche, **dadurch gekennzeichnet, dass** der obere Teil (1) ausgehend von der Öffnung (2) einen sich in das Innere des Gewölbes in Richtung auf den vorderen Teil des Ofens erstreckenden Kanal aufweist, welcher über einen für den Rauch reduzierten Durchlass endet, um so einen zu großen Wärmeverlust zu vermeiden.

5. Vorrichtung nach einem der vorhergehenden Ansprüche, **dadurch gekennzeichnet, dass** der bewegliche Wagen (7) Räder aufweist, von denen ein direktionales (10) mit einer Bremse ausgerüstet ist, welche seine Verlagerung leicht machen.

6. Vorrichtung nach einem der vorhergehenden Ansprüche, **dadurch gekennzeichnet, dass** die Kuppel (11) aus zwei Teilen ausgeführt ist, welche aufeinander aufliegen.

7. Vorrichtung nach einem der Ansprüche 3 und 5, **dadurch gekennzeichnet, dass** die Basis des Ofens in einen Kreis (6) aus Metall oder Gusseisen eingreift, welcher mit Befestigungspunkten versehen ist, welche an dem oberen Teil des Wagens (7) befestigt werden.

8. Vorrichtung nach einem der vorhergehenden Ansprüche, **dadurch gekennzeichnet, dass** jedes gusseiserne Element gegossene Griffe aufweist, wodurch jedes tragbar ist.

9. Vorrichtung nach einem der vorhergehenden Ansprüche, **dadurch gekennzeichnet, dass** alle Teile leicht demontierbar sind.

## Claims

1. Device, intended for cooking, by wood or gas combustion, pizzas and grills and comprising a dome-shaped upper part made up of simple, portable, nestable and superposable elements forming an oven and provided at its top with an orifice (2),**characterized in that**:
- the said upper part is made of food-grade cast iron,
- the dome of the upper part (1) is covered by a perforated cupola (11) designed to leave between itself and the dome a space that allows air to circulate so as to keep it at a fairly low temperature in order to avoid burning users,
- the oven is equipped with a refractory hearth (3) on which the food rests, which is reduced in size along two sides so as to allow the passage of ash and embers, and which is rested on a cast iron grating (6), and
- beneath the said refractory hearth, there is an ash and ember collecting cone (5) provided with a system that allows the embers to be distributed well to ensure even heat and cooking, and with an opening system making it easier to remove the cold ash for ease of cleaning.

2. Device according to Claim 1, **characterized in that** the orifice (2) is raised by a sleeve capable of accepting equipment aimed at extracting smoke.

3. Device according to either one of the preceding claims, **characterized in that** it rests on a mobile trolley (7) comprising a shelf (8) intended to hold the various utensils of use in pizza-making, and a tray for storing the wood (9).

4. Device according to any one of the preceding claims, **characterized in that** the upper part (1) comprises, leading from the orifice (2), a duct extending inside the domed roof towards the front of the oven and ending in a small passage for the smoke, so as to avoid too great a heat loss.

5. Device according to any one of the preceding claims, **characterized in that** the mobile trolley (7) has wheels, of which one (10) is directional and fitted with a brake, making it easy to move around.

6. Device according to any one of the preceding claims, **characterized in that** the cupola (11) is made of two parts resting one upon the other.

7. Device according to either one of Claims 3 and 5, **characterized in that** the base of the oven nestles inside a metal or cast iron hoop (6) provided with anchor points that attach to the upper part of the trolley (7).

8. Device according to any one of the preceding claims, **characterized in that** each cast iron element comprises cast-in handles allowing each to be portable.

9. Device according to any one of the preceding claims, **characterized in that** all the parts are easily disassembled.
